# EUROPÄISCHE PATENTSCHRIFT

(11) **EP 2 683 755 B1**
(45) Veröffentlichungstag und Bekanntmachung des Hinweises auf die Patenterteilung: **13.05.2015**
(21) Anmeldenummer: 12706615.7
(22) Anmeldetag: 05.03.2012
(51) Int. Cl.: C08G 18/48

(54) **VERFAHREN ZUR HERSTELLUNG VON POLYURETHAN-HARTSCHAUMSTOFFEN**
METHOD FOR PRODUCING RIGID POLYURETHANE FOAM MATERIALS
PROCÉDÉ DE PRODUCTION DE MOUSSES RIGIDES DE POLYURÉTHANE

(30) Priorität: 08.03.2011 EP 11157317
(43) Veröffentlichungstag der Anmeldung: 15.01.2014
(73) Patentinhaber: BASF SE, 67056 Ludwigshafen (DE)
(72) Erfinder: KUNST, Andreas, 67063 Ludwigshafen (DE); FRICKE, Marc, 49090 Osnabrück (DE); SCHÜTTE, Markus, 49080 Osnabrück (DE); ELING, Berend, 49448 Lemförde (DE)
(86) Internationale Anmeldenummer: PCT/EP2012/053697
(87) Internationale Veröffentlichungsnummer: WO 2012/119970

(56) Entgegenhaltungen:
- WO-A1-98/27132
- WO-A1-2008/058863
- DE-A1-102004 048 728
- GB-A- 1 107 985
- US-A- 3 169 934

## Beschreibung

Die vorliegende Erfindung betrifft ein Verfahren zur Herstellung von Polyurethan (PU)-Hartschaumstoffen durch Umsetzung von Polyisocyanaten mit Verbindungen mit mindestens zwei mit Isocyanatgruppen reaktiven Wasserstoffatomen in Gegenwart von Treibmitteln.

Üblicherweise werden zur Herstellung von Hartschaumstoffen auf Isocyanatbasis Polyole mit hohen Funktionalitäten und relativ kurzen Ketten verwendet, um optimale Vernetzung der Schäume zu gewährleisten. Die vorzugsweise eingesetzten Polyetheralkohole haben zumeist eine Funktionalität von 4 bis 8 und eine Hydroxylzahl im Bereich zwischen 300 bis 600, insbesondere zwischen 400 und 500 mg KOH/g. Es ist bekannt, dass Polyole mit sehr hoher Funktionalität und Hydroxylzahlen im Bereich zwischen 300 und 600 eine sehr hohe Viskosität aufweisen, wenn sie auf Propylenoxid basieren. Derartige Polyole auf Basis von Ethylenoxid sind dagegen um bis zu ein Viertel weniger viskos. Weiterhin ist bekannt, dass derartige Polyole sehr polar sind und somit eine schlechte Löslichkeit von Kohlenwasserstoffen und eine schlechte Verträglichkeit mit Polyisocyanaten aufweisen.

Eine wesentliche Anforderung an die Hartschaumstoffe ist die Verkürzung der Entformzeit, ohne dass es zu Einschränkungen in den mechanischen oder den Verarbeitungseigenschaften kommt. Weiterhin sollten die Ausgangsprodukte für die Herstellung der Hartschaumstoffe eine gute Löslichkeit für das Treibmittel, insbesondere bei Einsatz von Kohlenwasserstoffen als Treibmittel zeigen.

Hochfunktionelle Polyole dürfen keine frühe Aushärtung des Polyurethansystems bewirken, da ansonsten komplizierte Hohlräume, wie sie insbesondere bei Kühlgeräten vorkommen, nicht vollständig ausgefüllt werden können. Wesentlich für zahlreiche Anwendungen auf dem Hartschaumgebiet, besonders bei der Dämmung von Kühlgeräten, ist das Aushärteverhalten des angewendeten Systems, welches die Taktzeiten bei der Geräteherstellung stark mitbestimmt.

Aus WO98/27132 geht hervor, dass Polyole auf Basis von 1,2-Butylenoxid eine verbesserte Löslichkeit für Kohlenwasserstoffe aufweisen, verglichen mit den entsprechenden Propylenoxidbasierten Polyolen.

Aus WO2006/037540 und WO2008/058863 ist bekannt, dass Polyetheralkohole, die mit vicinalem Toluylendiamin (TDA) gestartet sind, eine besonders gute Löslichkeit von Kohlenwasserstoffen enthaltenden Treibmitteln zeigen. Diese Polyetheralkohole zeichnen sich durch eine relative geringe Funktionalität aus und bewirken eine späte Aushärtung des Polyurethansystems.

Die Verfahren zur Herstellung von PU-Hartschaumstoffen, die aus dem Stand der Technik bekannt sind, weisen einige Unzulänglichkeiten auf und können meist nicht alle der oben genannten Anforderungen erfüllen.

Aufgabe der Erfindung war es somit, die genannten Probleme zu überwinden und ein verbessertes Verfahren zur Herstellung von Polyurethan-Hartschaumstoffen bereitzustellen. Dabei soll das System optimale Fließ- und Aushärtezeiten sowie eine niedrige Viskosität der Polyolkomponenten, die eine Verarbeitung in der Produktion nach dem Stand der Technik erlaubt, aufweisen. Darüber hinaus soll eine hohe Löslichkeit der Treibmittel im System zur Einstellung niedriger Rohdichten im Bauteil vorliegen und das System soll gute Entformungseigenschaften aufweisen.

Diese Aufgabe konnte überraschenderweise durch die Verwendung eines Poly(butylenoxid)-Polyols (i) mit einer Hydroxylzahl von 380 bis 500 mg KOH/g und einem amingestarteten Polyetheralkohol (ii) mit einer Hydroxylzahl von 360 bis 450 mg KOH/g sowie optional einem Polyetherpolyol (iii) (sog. "Softpolyol") mit einer Hydroxylzahl von 140 bis 280 mg KOH/g gelöst werden.

Der Gegenstand der vorliegenden Erfindung ist somit ein Verfahren zur Herstellung von Polyurethan-Hartschaumstoffen, durch Umsetzung von
a) mindestens einem Polyisocyanat mit
b) Verbindungen mit mindestens zwei mit Isocyanatgruppen reaktiven Wasserstoffato men, und
c) mindestens einem Treibmittel,
dadurch gekennzeichnet, dass für die Verbindungen b) mit mindestens zwei mit Isocyanatgruppen reaktiven Wasserstoffatomen ein Gemisch aus
b1) mindestens einem Polyetheralkohol mit einer Hydroxylzahl von 380 bis 500 mg KOH/ g, herstellbar durch Anlagerung von Butylenoxid, optional in Kombination mit mindestens einem weiteren Alkylenoxid, an mindestens eine OH- oder NH-funktionelle Starterverbindung mit einer Funktionalität von 4 bis 8 mit Hilfe eines basischen Katalysators, bevorzugt Imidazol,
b2) mindestens einem Polyetheralkohol mit einer Hydroxylzahl von 360 bis 450 mg KOH/ g, herstellbar durch Anlagerung eines Alkylenoxids an mindestens ein aromatisches oder aliphatisches Amin,
b3) optional mindestens einem Polyetherpolyol mit einer Hydroxylzahl von 140 bis 280 mg KOH/ g, herstellbar durch Anlagerung eines Alkylenoxids an mindestens eine OH- oder NH-funktionelle Starterverbindung,
eingesetzt wird.

Die OH-Zahl wird dabei erfindungsgemäß nach DIN 53240 bestimmt.

Weitere Gegenstände der Erfindung sind auch ein Polyurethan-Hartschaumstoff, herstellbar nach dem erfindungsgemäßen Verfahren, sowie die Verwendung eines nach dem erfindungsgemäßen Verfahren herstellbaren Polyurethan-Hartschaumstoffs als Wärmedämmmaterial z. B. in Kühlgeräten, in Warmwasserspeichern, in Fernwärmerohren oder im Bauwesen, beispielsweise in Sandwichelementen.

Das Poly(butylenoxid)-Polyol (b1) wird nach üblichen und allgemein bekannten Verfahren durch Ringöffnungspolymerisation von Butylenoxid (BO) unter Verwendung von höherfunktionellen Startermolekülen hergestellt. Als Startermoleküle kommen beispielsweise Zucker (Saccharose), Sorbitol, Mannose, Pentaerythrit (F 4 - 8) in Frage. In einer Ausführungsform können NH- oder OH-gruppenhaltige Costarter eingesetzt werden (z.B. Glycerin, TMP, MEG, DEG, MPG, DPG, EDA, TDA).
Neben den Butylenoxid-Isomeren 1,2-Butylenoxid, 2,3-Butylenoxid oder Isobutylenoxid können noch weitere Alkylenoxide in der sogenannten Blockfahrweise oder auch in der Mischfahrweise dosiert werden. Als Comonomere kommen hier die allgemein üblichen Alkylenoxide Propylenoxid (PO) und Ethylenoxid (EO), 1,2-Pentenoxid, Styroloxid, Epichlorhydrin, Cyclohexenoxid und höhere Alkylenoxide wie C₅-C₃₀-α-Alkylenoxide) in Frage. Dabei ist auch die Verwendung von Alkylenoxidengemischen (z.B. PO/EO und BO) möglich.

Die Ringöffnungspolymerisation erfolgt - wie allgemein bekannt - mit Hilfe von Katalysatoren. Dabei handelt es sich in der Regel um basische Katalysatoren wie Alkali- oder Erdalkalimetallhydroxide bzw. Alkali- oder Erdalkalimetallalkoholate (z.b. NaOH, KOH, CsOH oder Natriummethylat, Kaliummethylat). Weiterhin können für die Alkoxylierung Katalysatoren verwendet werden, die aminohaltige funktionelle Gruppen enthalten (z.B. DMEOA oder Imidazol). Ferner ist die Verwendung von Carbenen als Alkoxylierungskatalysatoren möglich.

In einer Ausführungsform des erfindungsgemäßen Verfahrens zur Herstellung von Polyurethan-Hartschaumstoffen ist der für die Herstellung des Poly(butylenoxid)-Polyols (b1) verwendbare Katalysator ausgewählt aus der Gruppe enthaltend aminofunktionelle Katalysatoren. In einer Ausführungsform ist der für die Herstellung des Poly(butylenoxid)-Polyols (b1) verwendbare Katalysator ausgewählt aus der Gruppe enthaltend Trimethylamin, Triethylamin, Tripropylamin, Tributylamin, N,N'-Dimethylethanolamin, N,N'-Dimethylcyclohexylamin, Dimethylethylamin, Dimethylbutylamin, N,N'-Dimethylanilin, 4-Dimethylaminopyridin, N,N'-Dimethylbenzylamin, Pyridin, Imidazol, N-Methylimidazol, 2-Methylimidazol, 4-Methylimidazol, 5-Methylimidazol, 2-Ethyl-4-methylimidazol, 2,4-Dimethylimidazol, 1-Hydroxypropylimidazol, 2,4,5-Trimethylimidazol, 2-ethylimidazol, 2-Ethyl-4-methylimidazol, N-Phenylimidazol, 2-Phenylimidazol, 4-Phenylimidazol, Guanidin, alkylierte Guanidine, 1,1,3,3-Tetramethylguanidin, 7-Methyl-1,5,7-triazabicyclo[4.4.0]dec-5-en, 1,5-Diazobicylco[4.3.0]-non-5-en, 1,5-Diazabicylo[5.4.0]undec-7-en.

Die genannten verwendbaren Aminkatalysatoren können allein oder in beliebigen Mischungen zueinander eingesetzt werden. In einer bevorzugten Ausführungsform der Erfindung ist der für die Herstellung von (b1) verwendbare Katalysator Dimethylethanolamin.
In einer weiteren bevorzugten Ausführungsform der Erfindung ist der für die Herstellung von (b1) verwendbare Katalysator ausgewählt aus der Gruppe der Imidazole, besonders bevorzugt Imidazol.

In einer Ausführungsform des erfindungsgemäßen Verfahrens zur Herstellung von Polyurethan-Hartschaumstoffen wird das amingestartete Polyol (b2) durch Alkylenoxid-Anlagerung an aromatische Amine wie z.B. vicinales Toluylendiamin, Methylendianilin (MDA) und/ oder polymeres Methylendianilin (pMDA) hergestellt. In einer Ausführungsform des erfindungsgemäßen Verfahrens zur Herstellung von Polyurethan-Hartschaumstoffen wird das amingestartete Polyol (b2) durch Alkylenoxid-Anlagerung an aliphatische Amine wie zum Beispiel Ethylendiamin hergestellt.

In einer Ausführungsform des erfindungsgemäßen Verfahrens zur Herstellung von Polyurethan-Hartschaumstoffen ist das optionale Polyetherpolyol (b3) mit einer Hydroxylzahl von 140 bis 280 mg KOH/g ausgewählt aus der Gruppe umfassend Alkylenoxid-Anlagerungsprodukte von Zucker, Glycerin, Ethylenglykol, Diethylenglykol, Propylenglykol, Dipropylenglykol, 1-4 Butandiol, Pentaerythrit, Trimethylolpropan, Wasser, Sorbitol, Anilin, TDA, M DA, EDA oder Kombinationen aus den genannten Verbindungen, bevorzugt Glycerin, Ethylenglykol, Diethylenglykol, Propylenglykol und Dipropylenglykol.

Auch hier erfolgt die Anlagerung der Alkylenoxide nach den allgemein üblichen Verfahren unter Verwendung von Katalysatoren. Für die Herstellung der Polyole (b2) und (b3) kommen prinzipiell alle Katalysatoren in Frage, die auch für die Herstellung der Poly(butylenoxid)-Polyole (b1) verwendbar sind.

Die Ringöffnungspolymerisation zur Herstellung der Polyol (bi), (bii) und (biii) erfolgt unter üblichen Reaktionsbedingungen im Temperaturbereich zwischen 90 und 160°C, vorzugsweise zwischen 100 und 130°C bei Drücken im Bereich zwischen 0 und 20 bar, vorzugsweise zwischen 0 und 10 bar.

Die Anlagerung der Alkylenoxide zur Herstellung der Polyole (b1), (b2) und (b3) kann im Semibatch-Verfahren oder auch vollständig kontinuierlich oder semikontinuierlich verlaufen. In einer weiteren Ausführungsform wird zusätzlich zur Startermischung ein bestimmter Anteil an Produkt oder Vorprodukt mit in den Reaktor vorgelegt (Heel-Fahrweise).

Nach Beendigung der Anlagerung der Alkylenoxide werden die Polyole in der Regel nach üblichen Verfahren aufgearbeitet, indem die nicht umgesetzten Alkylenoxide sowie leicht flüchtige Bestandteile entfernt werden, üblicherweise durch Destillation, Wasserdampf- oder Gasstrippen und/ oder anderen Methoden der Desodorierung. Falls erforderlich, kann auch eine Filtration erfolgen.

Das Poly(butylenoxid)-Polyol (b1) zeichnet sich durch OH-Zahlen im Bereich von 380 bis 500 mg KOH/g, vorzugsweise von 300 bis 500 mg KOH/g aus.

Das amingestarteten Polyetheralkohol (b2) zeichnet sich durch OH-Zahlen im Bereich von 360 bis 450 mg KOH/g aus.

Die Funktionalitäten der Poly(butylenoxid)-Polyole (b1) wird bestimmt durch die Funktionalität der Startermischung und liegt im Bereich zwischen 3.5 - 8, bevorzugt zwischen 4 - 6 OH-Gruppen/Molekül.

Die Viskositäten der Polyetherole (b1), (b2) und (b3) liegen im für diesen OH-Zahl-Bereich üblichen Rahmen zwischen 100 und 50.000 mPas, bevorzugt zwischen 200 und 30.000 mPas.

Die Viskosität des Poly(butylenoxid)-Polyols (b1) liegt bevorzugt zwischen 5.000 und 30.000 mPas.

In einer Ausführungsform des erfindungsgemäßen Verfahrens zur Herstellung von Polyurethan-Hartschaumstoffen ist das mindestens eine Polyisocyanat (a) ausgewählt aus der Gruppe enthaltend aromatische, aliphatische und/ oder cycloaliphatische Diisocyanate, beispielsweise Diphenyl-Methan-Diisocyanat (MDI), polymeres MDI (pMDI), Toluylendiisocyanat (TDI), Tri-, Tetra-, Penta-, Hexa-, Hepta- und/oder Oktamethylendiisocyanat, 2-Methyl-pentamethylendiisocyanat-1,5, 2-Ethyl-butylen-diisocyanat-1,4,1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclo-hexylmethan-diisocyanat, bevorzugt TDI, MDI und/ oder pMDI.

In einer Ausführungsform des erfindungsgemäßen Verfahrens zur Herstellung von PU-Hartschaumstoffen ist das mindestens eine Treibmittel (c) ausgewählt aus der Gruppe enthaltend physikalische Treibmittel und chemische Treibmittel.
Bevorzugt wird genau ein physikalisches und genau ein chemisches Treibmittel verwendet.

In Kombination mit oder an Stelle von chemischen Treibmitteln können auch physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den verwendbaren physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane. Die physikalischen Treibmittel werden zumeist ausgewählt aus der Gruppe enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

In einer bevorzugten Ausführungsform der Erfindung sind die Treibmittel (c) Kohlenwasserstoffe. Besonders bevorzugt werden die Treibmittel ausgewählt aus der Gruppe enthaltend Alkane und/ oder Cycloalkane mit mindestens 4 Kohlenstoffatomen. Insbesondere werden Pentane, bevorzugt iso-Pentan und Cyclopentan, eingesetzt. Bei der Verwendung der Hartschaumstoffe als Isolierung in Kühlgeräten ist Cyclopentan bevorzugt. Die Kohlenwasserstoffe können im Gemisch mit Wasser eingesetzt werden.

Als Beispiele für erfindungsgemäß einsetzbare Treibmittel (c) seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und 1,1,1,2,3,3,3-Heptafluorpropan, sowie Perfluoralkane, wie C₃F₈, C₄F₁₀, C₅F₁₂, C₆F₁₄, und C₇F₁₆. Die genannten physikalischen Treibmittel können allein oder in beliebigen Kombinationen untereinander eingesetzt werden.

Weiterhin können als Treibmittel Hydrofluorolefine, wie 1,3,3,3-Tetrafluorpropen, oder Hydrochlorfluorolefine, wie 1,Chlor-3,3,3-trifluorpropen, eingesetzt werden. Derartige Treibmittel sind beispielsweise in WO 2009/048826 beschrieben.

Als chemisches Treibmittel wird in einer bevorzugten Ausführungsform Wasser verwendet, das mit Isocyanatgruppen unter Abspaltung von Kohlendioxid reagiert. Als physikalisches Treibmittel kann zum Beispiel auch Ameisensäure eingesetzt werden.

Die erfindungsgemäße Herstellung der Polyurethan-Hartschaumstoffe kann, falls erforderlich, in Anwesenheit von Katalysatoren, Flammschutzmitteln sowie üblichen Hilfs- und/ oder Zusatzstoffen durchgeführt werden.

Als Katalysatoren werden insbesondere Verbindungen eingesetzt, welche die Reaktion der Isocyanatgruppen mit den mit Isocyanatgruppen reaktiven Gruppen stark beschleunigen.
Solche Katalysatoren sind stark basische Amine, wie z. B. sekundäre aliphatische Amine, Imidazole, Amidine, sowie Alkanolamine oder organische Metallverbindungen, insbesondere organische Zinnverbindungen.

Wenn in den Polyurethan-Hartschaum auch Isocyanuratgruppen eingebaut werden sollen, werden dafür spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Weitere Angaben zu eingesetzten Ausgangsverbindungen finden sich beispielsweise im Kunststoffhandbuch, Band 7 "Polyurethane", herausgegeben von Günter Oertel, Carl-Hanser-Verlag München, 3. Auflage, 1993.

Die Erfindung soll am nachfolgenden Beispiel näher erläutert werden. Dabei soll das Beispiel einen Aspekt der Erfindung illustrieren und keinesfalls als einschränkend für den Umfang der Erfindung angesehen werden.

Eingesetzte Rohstoffe:
Polyol A: Polyetheralkohol aus Saccharose, Glycerin und Propylenoxid, Funktionalität 5,1, Hydroxylzahl 450, Viskosität 18500 mPa.s bei 25°C
Polyol B: Polyetheralkohol aus vicinalem TDA, Ethylenoxid und Propylenoxid, Gehalt an Ethylenoxid: 15%, Funktionalität 3,8, Hydroxylzahl 390, Viskosität 13000 mPa.s bei 25°C
Polyol C: Polyetheralkohol aus vicinalem TDA, Ethylenoxid und Propylenoxid, Gehalt an Ethylenoxid: 15%, Funktionalität 3,9, Hydroxylzahl 160, Viskosität 650 mPa.s bei 25°C
Polyol D: Dipropylenglykol

### Herstellung des Polyols E (erfindungsgemäß)

5936 g Saccharose, 1800 g Glycerin und 41 g Wasser werden in einem Druckautoklaven vorgelegt und mit 118 g einer 48%igen wässrigen KOH-Lösung versetzt. Nachdem die Reaktionsmischung dreimal mit Stickstoff inertisiert wurde, wird die Reaktionsmischung unter Vakuum bei 15 mbar für ca. 90 Minuten bei 130°C vom Wasser befreit. Anschließend werden zur Reaktionsmischung 17143 g 1,2-Butylenoxid mit einer Dosierrate von 2 kg/h dosiert. Nach beendeter Monomerdosierung und Erreichen eines konstanten Reaktordruckes wird nicht umgesetztes 1,2-Butylenoxid und andere flüchtige Bestandteile im Vakuum abdestilliert und das Produkt abgelassen. Das Produkt wird anschließend mit 2% Macrosorb® (Absorptionsmitel auf Basis Aluminosilikate) und 5% Wasser versetzt und für 2h bei 130°C gerührt. Nach der Entfernung des zugesetzten Wassers durch Vakuumdestillation und anschließender Filtration werden 25000 g des gewünschten Polyetherols in Form einer braun gefärbten, viskosen Flüssigkeit erhalten. Analytik:

| | |
|---|---|
| OH-Zahl = 461 mg KOH/g | (DIN 53240) |
| Viskosität = 23.234 mPas | (DIN 13421) |
| Säurezahl = 0,02 mg KOH/g | (DIN 53402) |
| Wasserwert = 0,024 % | (DIN 51777) |

Stabilisator: Tegostab® B 8491 (Silikonstabilisator von Evonik)
Katalysator 1: Dimethylcyclohexylamin (BASF SE)
Katalysator 2: Pentamethyldiethylentriamin (BASF SE)
Katalysator 3: Lupragen® N600 (s-Triazin) (BASF SE)
Isocyanat: Polymer-MDI (Lupranat® M20, BASF SE)

### Maschinenverschäumung:

Aus den angegebenen Rohstoffen wurde eine Polyolkomponente hergestellt. Mittels eines Hochdruck-Puromaten® PU 30/80 IQ (BASF Polyurethanes GmbH) mit einer Austragsmenge von 250 g/sek. wurde die Polyolkomponente mit der erforderlichen Menge des angegebenen Isocyanats vermischt, so dass ein Isocyanat-Index (wenn nicht anders angegeben) von 116,7 erreicht wurde. Die Reaktionsmischung wurde in temperierte Formwerkzeuge der Abmessungen 2000 mm x 200 mm x 50 mm bzw. 400 mm x 700 mm x 90 mm eingespritzt und dort aufschäumen lassen. Die Überfüllung betrug 15 %.

| | 1 | 2 (erfindungsgemäß) |
|---|---|---|
| Polyol-Komponente | | |
| Polyol A (Gewichtsteile) | 54 | |
| Polyol B (Gewichtsteile) | 22 | 22 |
| Polyol C (Gewichtsteile) | 15 | 15 |
| Polyol D (Gewichtsteile) | 2 | 2 |
| Polyol E (erfindungsgemäß) (Gewichtsteile) | | 54 |
| Wasser (Gewichtsteile) | 2,6 | 2,6 |
| Stabilisator (Gewichtsteile) | 2,7 | 2,7 |
| Katalysator (Gewichtsteile) | 1,7 | 1,7 |
| Cyclopentan (Gewichtsteile) | 13 | 13 |
| Isocyanat-Komponente | | |
| Isocyanat (Gewichtsteile) | 133 | 133 |
| Abbindezeit [s] | 37 | 35 |
| Freies Raumgewicht [g/L] | 24,0 | 24,0 |
| Viskosität Polyol-Komponente [mPas@25°C] | 6800 | 7400 |
| Minimale Fülldichte [g/L] | 31,8 | 32,4 |
| Polyol-Komponente | | |
| Fließfaktor (min. Fülldichte / freie Rohdichte) | 1,33 | 1,31 |
| Wärmeleitfähigkeit [mW/m*K] | 19,1 | 18,9 |
| Druckfestigkeit [N/mm²] | 15,9 | 15,7 |
| Kernrohdichte [g/L] | 33,2 | 32,6 |
| Nachexpansion nach 24h [mm] (%) | | |
| 3 Min. | 4,8 | 3,6 |
| 4 Min. | 3,2 | 2,3 |
| 5 Min. | 2,2 | 1,5 |
| 7 Min. | 1,0 | 0,6 |
| Phasenstabilität | homogen | homogen |

Beispiel 1 stellt ein Vergleichsbeispiel dar. Das System in Beispiel 2 (erfindungsgemäß) mit einem Polyetheralkohol auf Basis Saccharose, Glycerin und Butylenoxid weist deutlich verbesserte Entformungseigenschaften auf, die sich in einer niedrigeren Nachexpansion äußern. Es konnte somit gezeigt werden, dass das erfindungsgemäße Verfahren zu verbesserten Eigenschaften führt.

## Patentansprüche

1. Verfahren zur Herstellung von Polyurethan-Hartschaumstoffen, durch Umsetzung von
a) mindestens einem Polyisocyanat mit
b) Verbindungen mit mindestens zwei mit Isocyanatgruppen reaktiven Wasserstoffatomen, und
c) mindestens einem Treibmittel,
**dadurch gekennzeichnet, dass** für die Verbindungen b) mit mindestens zwei mit Isocyanatgruppen reaktiven Wasserstoffatomen ein Gemisch aus
b1) mindestens einem Polyetheralkohol mit einer Hydroxylzahl von 380 bis 500 mg KOH/ g, herstellbar durch Anlagerung von Butylenoxid, optional in Kombination mit mindestens einem weiteren Alkylenoxid, an mindestens eine OH- oder NH-funktionelle Starterverbindung mit einer Funktionalität von 4 bis 8 mit Hilfe eines basischen Katalysators,
b2) mindestens einem Polyetheralkohol mit einer Hydroxylzahl von 360 bis 450 mg KOH/ g, herstellbar durch Anlagerung eines Alkylenoxids an mindestens ein aromatisches oder aliphatisches Amin,
b3) optional mindestens einem Polyetherpolyol mit einer Hydroxylzahl von 140 bis 280 mg KOH/ g, herstellbar durch Anlagerung eines Alkylenoxids an mindestens eine OH- oder NH-funktionelle Starterverbindung,
eingesetzt wird.

2. Verfahren gemäß Anspruch 1, wobei die OH- oder NH-funktionelle Starterverbindung in b1) ausgewählt ist aus der Gruppe enthaltend Saccharose, Sorbitol, Mannose und Pentaerythrit, Glycerin, Trimethylolpropan, Ethylenglykol, Diethylenglykol, Propylenglykol, Dipropylenglykol, Neopentylglykol, 1,4-Butandiol, Wasser, Toluoldiamin, Methylendianilin, polymeres Methylendianilin und Ethylendiamin.

3. Verfahren gemäß Anspruch 1 oder 2, wobei das Alkylenoxid in b2) ausgewählt ist aus der Gruppe enthaltend 1,2-Pentenoxid, Propylenoxid, Ethylenoxid oder Mischungen hieraus.

4. Verfahren gemäß Anspruch 3, wobei in b2) ein aromatisches Amin zum Einsatz kommt.

5. Verfahren gemäß Anspruch 4, wobei das aromatische Amin in b2) ausgewählt ist aus der Gruppe enthaltend vicinales Toluylendiamin (TDA), Methylendianilin (MDA) und polymeres Methylendianilin (pMDA).

6. Verfahren gemäß Anspruch 1 oder 2, wobei in b2) ein aliphatisches Amin zum Einsatz kommt.

7. Verfahren gemäß Anspruch 6, wobei das aliphatische Amin in b2) ausgewählt ist aus der Gruppe enthaltend Ethylendiamin, 1,3-Propylendiamin, 1,4-Butylendiamin, Monoethanolamin, Diethanolamin, Monoisopropanolamin, Diisopropanolamin.

8. Verfahren gemäß einem der Ansprüche 1 bis 7, wobei das Polyetherpolyol b3) vorhanden ist.

9. Verfahren gemäß Anspruch 8, wobei das Alkylenoxid in b3) ausgewählt ist aus der Gruppe enthaltend 1,2-Pentenoxid, Propylenoxid, Ethylenoxid oder Mischungen hieraus.

10. Verfahren gemäß einem der Ansprüche 8 oder 9, wobei die OH- oder NH-funktionelle Starterverbindung in b3) ausgewählt ist aus der Gruppe enthaltend Saccharose, Glycerin, Ethylenglykol, Diethylenglykol, Propylenglykol, Dipropylenglykol, 1-4 Butandiol, Pentaerythrit, Trimethylolpropan, Wasser, Sorbitol, Anilin, TDA, M DA, EDA und Kombinationen aus den genannten Verbindungen.

11. Verfahren gemäß einem der Ansprüche 1 bis 7, wobei das Polyetherpolyol b3) nicht vorhanden ist.

12. Verfahren gemäß einem der Ansprüche 1 bis 11, wobei der Anteil der Komponente b1) bezogen auf b) zwischen 40 und 60 Gew -.% beträgt.

13. Verfahren gemäß einem der Ansprüche 1 bis 12, wobei der Anteil der Komponente b2) bezogen auf b) zwischen 20 und 40 Gew.-% beträgt.

14. Verfahren gemäß einem der Ansprüche 1 bis 13, wobei der basische Katalysator unter b1) ausgewählt ist aus der Gruppe enthaltend aminofunktionelle Katalysatoren.

15. Verfahren gemäß einem der Ansprüche 1 bis 14, wobei das Polyisocyanat a) ausgewählt ist aus der Gruppe enthaltend aromatische, aliphatische und cycloaliphatische Diisocyanate.

16. Verfahren gemäß einem der Ansprüche 1 bis 15, wobei das Treibmittel c) ausgewählt ist aus der Gruppe enthaltend physikalische Treibmittel und chemische Treibmittel.

17. Polyurethan-Hartschaumstoff, herstellbar nach dem Verfahren eines der Ansprüche 1 bis 16.

18. Verwendung eines nach dem Verfahren eines der Ansprüche 1 bis 16 herstellbaren Polyurethan-Hartschaumstoffs als Wärmedämmmaterial in Kühlgeräten, in Warmwasserspeichern, in Fernwärmerohren oder im Bauwesen.

## Claims

1. A process for the production of polyurethane rigid foams by reaction of
a) at least one polyisocyanate with
b) compounds with at least two hydrogen atoms reactive with isocyanate groups, and
c) at least one blowing agent,
wherein for the compounds b) with at least two hydrogen atoms reactive with isocyanate groups a mixture of
b1) at least one polyether alcohol with a hydroxyl number from 380 to 500 mg KOH/g, producible by addition of butylene oxide, optionally in combination with at least one further alkylene oxide, to at least one OH or NH functional starter compound with a functionality of 4 to 8 with the aid of a basic catalyst,
b2) at least one polyether alcohol with a hydroxyl number from 360 to 450 mg KOH/g, producible by addition of an alkylene oxide to at least one aromatic or aliphatic amine, and
b3) optionally at least one polyether polyol with a hydroxyl number from 140 to 280 mg KOH/g, producible by addition of an alkylene oxide to at least one OH or NH functional starter compound,
is used.

2. The process according to claim 1, wherein the OH or NH functional starter compound in b1) is selected from the group comprising sucrose, sorbitol, mannose and pentaerythritol, glycerol, trimethylolpropane, ethylene glycol, diethylene glycol, propylene glycol, dipropylene glycol, neopentyl glycol, 1,4-butanediol, water, toluene diamine, methylene dianiline, polymeric methylene dianiline and ethylenediamine.

3. The process according to claim 1 or 2, wherein the alkylene oxide in b2) is selected from the group comprising 1,2-pentene oxide, propylene oxide, ethylene oxide or mixtures thereof.

4. The process according to claim 3, wherein an aromatic amine is used in b2).

5. The process according to claim 4, wherein the aromatic amine in b2) is selected from the group comprising vicinal toluene diamine (TDA), methylene dianiline (MDA) and polymeric methylene dianiline (pMDA).

6. The process according to claim 1 or 2, wherein an aliphatic amine is used in b2).

7. The process according to claim 6, wherein the aliphatic amine in b2) is selected from the group comprising ethylenediamine, 1,3-propylene diamine, 1,4-butylene diamine, monoethanolamine, diethanolamine, monoisopropanolamine and diisopropanolamine.

8. The process according to one of claims 1 to 7, wherein the polyether polyol b3) is present.

9. The process according to claim 8, wherein the alkylene oxide in b3) is selected from the group comprising 1,2-pentene oxide, propylene oxide, ethylene oxide or mixtures thereof.

10. The process according to one of claims 8 or 9, wherein the OH or NH functional starter compound in b3) is selected from the group comprising sucrose, glycerol, ethylene glycol, diethylene glycol, propylene glycol, dipropylene glycol, 1,4-butanediol, pentaerythritol, trimethylolpropane, water, sorbitol, aniline, TDA, MDA, EDA and combinations of the said compounds.

11. The process according to one of claims 1 to 7, wherein the polyether polyol b3) is not present.

12. The process according to one of claims 1 to 11, wherein the content of the component b1) based on b) is between 40 and 60 wt.%.

13. The process according to one of claims 1 to 12, wherein the content of the component b2) based on b) is between 20 and 40 wt.%.

14. The process according to one of claims 1 to 13, wherein the basic catalyst under b1) is selected from the group comprising amino-functional catalysts.

15. The process according to one of claims 1 to 14, wherein the polyisocyanate a) is selected from the group comprising aromatic, aliphatic and cycloaliphatic diisocyanates.

16. The process according to one of claims 1 to 15, wherein the blowing agent c) is selected from the group comprising physical blowing agents and chemical blowing agents.

17. A polyurethane rigid foam, producible by the process of one of claims 1 to 16.

18. The use of a polyurethane rigid foam producible by the process of one of claims 1 to 16 as thermal insulation material in cooling appliances, in hot water storage systems, in district heating pipes or in the building and construction industry.

## Revendications

1. Procédé de fabrication de mousses dures de polyuréthane, par mise en réaction de :
a) au moins un polyisocyanate avec
b) des composés contenant au moins deux atomes d'hydrogène réactifs avec les groupes isocyanate, et
c) au moins un agent gonflant,
**caractérisé en ce qu'**un mélange de
b1) au moins un polyéther-alcool ayant un indice hydroxyle de 380 à 500 mg KOH/g, pouvant être fabriqué par addition d'oxyde de butylène, éventuellement en combinaison avec au moins un oxyde d'alkylène supplémentaire, sur au moins un composé de départ à fonction OH ou NH ayant une fonctionnalité de 4 à 8 à l'aide d'un catalyseur basique,
b2) au moins un polyéther-alcool ayant un indice hydroxyle de 360 à 450 mg KOH/g, pouvant être fabriqué par addition d'un oxyde d'alkylène sur au moins une amine aromatique ou aliphatique,
b3) éventuellement au moins un polyéther-polyol ayant un indice hydroxyle de 140 à 280 mg KOH/g, pouvant être fabriqué par addition d'un oxyde d'alkylène sur au moins un composé de départ à fonction OH ou NH,
est utilisé pour les composés b) contenant au moins deux atomes d'hydrogène réactifs avec les groupes isocyanate.

2. Procédé selon la revendication 1, dans lequel le composé de départ à fonction OH ou NH en b1) est choisi dans le groupe contenant le saccharose, le sorbitol, le mannose et la pentaérythrite, la glycérine, le trimétholopropane, l'éthylène glycol, le diéthylène glycol, le propylène glycol, le dipropylène glycol, le néopentylglycol, le 1,4-butanediol, l'eau, la toluène-diamine, la méthylène-dianiline, la méthylène-dianiline polymère et l'éthylène-diamine.

3. Procédé selon la revendication 1 ou 2, dans lequel l'oxyde d'alkylène en b2) est choisi dans le groupe contenant l'oxyde de 1,2-pentène, l'oxyde de propylène, l'oxyde d'éthylène ou leurs mélanges.

4. Procédé selon la revendication 3, dans lequel une amine aromatique est utilisée en b2).

5. Procédé selon la revendication 4, dans lequel l'amine aromatique en b2) est choisie dans le groupe contenant la toluylène-diamine (TDA) vicinale, la méthylène-dianiline (MDA) et la méthylène-dianiline polymère (pMDA).

6. Procédé selon la revendication 1 ou 2, dans lequel une amine aliphatique est utilisée en b2).

7. Procédé selon la revendication 6, dans lequel l'amine aliphatique en b2) est choisie dans le groupe contenant l'éthylène-diamine, la 1,3-propylène-diamine, la 1,4-butylène-diamine, la monoéthanolamine, la diéthanolamine, la monoisopropanolamine, la diisopropanolamine.

8. Procédé selon l'une quelconque des revendications 1 à 7, dans lequel le polyéther-polyol b3) est présent.

9. Procédé selon la revendication 8, dans lequel l'oxyde d'alkylène en b3) est choisi dans le groupe contenant l'oxyde de 1,2-pentène, l'oxyde de propylène, l'oxyde d'éthylène ou leurs mélanges.

10. Procédé selon l'une quelconque des revendications 8 ou 9, dans lequel le composé de départ à fonction OH ou NH en b3) est choisi dans le groupe contenant le saccharose, la glycérine, l'éthylène glycol, le diéthylène glycol, le propylène glycol, le dipropylène glycol, le 1,4-butanediol, la pentaérythrite, le triméthylolpropane, l'eau, le sorbitol, l'aniline, la TDA, la MDA, l'EDA et les combinaisons des composés cités.

11. Procédé selon l'une quelconque des revendications 1 à 7, dans lequel le polyéther-polyol b3) n'est pas présent.

12. Procédé selon l'une quelconque des revendications 1 à 11, dans lequel la proportion du composant b1) par rapport à b) est comprise entre 40 et 60 % en poids.

13. Procédé selon l'une quelconque des revendications 1 à 12, dans lequel la proportion du composant b2) par rapport à b) est comprise entre 20 et 40 % en poids.

14. Procédé selon l'une quelconque des revendications 1 à 13, dans lequel le catalyseur basique en b1) est choisi dans le groupe contenant les catalyseurs à fonction amino.

15. Procédé selon l'une quelconque des revendications 1 à 14, dans lequel le polyisocyanate a) est choisi dans le groupe contenant les diisocyanates aromatiques, aliphatiques et cycloaliphatiques.

16. Procédé selon l'une quelconque des revendications 1 à 15, dans lequel l'agent gonflant c) est choisi dans le groupe contenant les agents gonflants physiques et les agents gonflants chimiques.

17. Mousse dure de polyuréthane, pouvant être fabriquée par le procédé selon l'une quelconque des revendications 1 à 16.

18. Utilisation d'une mousse dure de polyuréthane pouvant être fabriquée par le procédé selon l'une quelconque des revendications 1 à 16 en tant que matériau d'isolation thermique dans des appareils réfrigérants, dans des réservoirs d'eau chaude, dans des canalisations de chauffage urbain ou dans des bâtiments.
